# EUROPÄISCHE PATENTSCHRIFT

(11) **EP 2 992 303 B1**
(45) Veröffentlichungstag und Bekanntmachung des Hinweises auf die Patenterteilung: **24.06.2020**
(21) Anmeldenummer: 14719287.6
(22) Anmeldetag: 22.04.2014
(51) Int. Cl.: G01F 1/66, B06B 1/06, G10K 11/02

(54) **ULTRASCHALLWANDLER UND ULTRASCHALL-DURCHFLUSSMESSGERÄT**
ULTRASONIC TRANSDUCER AND ULTRASONIC FLOW METER
TRANSDUCTEUR ULTRASONORE ET DÉBITMÈTRE À ULTRASONS

(30) Priorität: 03.05.2013 DE 102013104544
(43) Veröffentlichungstag der Anmeldung: 09.03.2016
(73) Patentinhaber: Endress+Hauser Flowtec AG, 4153 Reinach (CH)
(72) Erfinder: WIEST, Achim, 79576 Weil am Rhein (DE); BERGER, Andreas, 79686 Hasel-Glashütten (DE)
(74) Vertreter: Andres, Angelika Maria
(86) Internationale Anmeldenummer: PCT/EP2014/058043
(87) Internationale Veröffentlichungsnummer: WO 2014/177411

(56) Entgegenhaltungen:
- EP-A1- 0 974 814
- DE-A1-102010 020 338

## Beschreibung

Die vorliegende Erfindung betrifft einen Ultraschallwandler nach dem Oberbegriff des Anspruchs 1 und ein Ultraschall-Durchflussmessgerät gemäß Anspruch 7.

Im Bereich der Ultraschallwandler-Aufbauten ist bereits eine Vielzahl von verschiedenen Aufbauten und Schichtabfolgen bekannt.

Die gattungsgemäße EP 0 974 814 B1 beschreibt ein Koppelelement mit einer Auflage bzw. Kontaktfläche, welches eine Ausnehmung zur Aufnahme eines Piezoelements aufweist. Zwischen dem Koppelelement und dem Piezoelement ist eine Metallscheibe angeordnet. Diese Metallscheibe ist in einer zur Auflage auf einer zur Auflagefläche schrägen Ebene, welche zugleich eine Grundfläche der Ausnehmung bildet, aufgeklebt. Die Metallscheibe weist zur Zentrierung und zur Sicherung gegen seitliches Verrutschen des Piezoelements angewinkelte Blechelemente auf, weiche aus der Ebene der Metallscheibe hervorstehen. Diese Konstruktion hat sich grundlegend bewährt und besticht insbesondere durch seine hohe Temperatur-Wechselbeanspruchung. Messfehler bzw. gestörte Ultraschallsignale können allerdings auftreten, wenn das Piezoelement nicht planar auf der Metallscheibe aufliegt sondern sich an den Knickkanten der angewinkelten Blechelemente abstützt.

Die Offenlegungsschrift DE 102010020338 A1 zeigt eine Gehäuseanordnung Ultraschall-Durchflussmesser sowie einen Ultraschall-Durchflussmesser, wobei die Anordnung ein Koppelelement mit einer ersten Ausnehmung aufweist, in welcher Ausnehmung die Anordnung eines Piezoelements vorgesehen ist. Zwischen dem Piezoelement und dem Koppelelement ist eine Zwischenlage mit einer Metallscheibe angeordnet, wobei die Metallscheibe ein Haltesegment aufweist, welche die Metallscheibe in der Anordnung randseitig abstützt.

Daher ist es ausgehend von der EP 0 974 814 B1 und der DE 102010020338 A1 Aufgabe der vorliegenden Erfindung eine Metallscheibe mit einem Halt sowohl für die Metallscheibe als auch für ein Piezoelement bereitzustellen, welche eine geringere Störung von Ultraschallsignalen verursacht.

Die Erfindung löst diese Aufgabe durch einen Ultraschallwandler mit den Merkmalen des Anspruchs 1 und durch ein Ultraschall-Durchflussmessgerät mit den Merkmalen des Anspruchs 7.

Ein erfindungsgemäßer Ultraschallwandler, umfasst ein Koppelelement, das eine erste Ausnehmung aufweist.

Erfindungsgemäß weist das Koppelelement eine erste Ausnehmung auf. Diese Ausnehmung ist beispielsweise eine Schrägbohrung, welche als Sackloch ausgebildet ist. Endständig weist die Ausnehmung vorzugsweise eine Grundfläche auf. Diese Grundfläche ist vorzugsweise im Wesentlichen eben ausgebildet, kann allerdings zur Vergrößerung der Oberfläche und zur besseren Anhaftung einer auf der Grundfläche aufzubringenden Vergussmasse, Riffelungen, Prägungen und dergleichen aufweisen. Die besagte erste Ausnehmung ist zur Anordnung eines Piezoelementes vorgesehen. In die besagte Grundfläche wird das Ultraschallsignal, insbesondere senkrecht zur Grundfläche, eingeleitet, welches zuvor durch ein Piezoelement erzeugt und ggf. über weitere Zwischenschichten, wie z.B. eine Metallscheibe zum Koppelelement hin übertragen wird.

Zwischen dem Piezoelement und dem Koppelelement ist erfindungsgemäß zumindest eine Zwischenlage angeordnet. Diese Zwischenlage umfasst eine Metallscheibe.

Die Metallscheibe weist erfindungsgemäß Halteelemente auf, wobei jedes Halteelement aus zwei Segmenten besteht, mit
a) jeweils einem ersten Segment, welches auf der gleichen Ebene liegt, wie die Metallscheibe und radial aus dem Umfang der Metallscheibe hervorsteht und
b) jeweils einem zweiten Segment, welches sich an das erste Segment anschließt und welches aus der Ebene der Metallplatte hervorsteht und unmittelbar mit dem ersten Segment verbunden ist,
wobei die Halteelemente (17, 17a) die Metallscheibe (14, 24) in der Ausnehmung (25) randseitig abstützen und wobei die Halteelemente (17, 17a) ein seitliches Verschieben des auf der Metallscheibe (14, 24) aufsitzenden Piezoelements (12, 22) verhindern.

Durch diese segmentweise Aufteilung der Halteelemente der Metallscheibe wird die Gefahr einer Verkippung des Piezoelements auf der Metallscheibe, insbesondere bei der Fertigung des Ultraschallwandlers verringert, wobei die Halteelemente in der Lage sind, zwei Funktionen derart auszuführen, dass sie die Metallscheibe in der Ausnehmung randseitig abstützen und dass die Halteelemente ein seitliches Verschieben des auf der Metallscheibe aufsitzenden Piezoelements verhindern.

Vorteilhafte Ausgestaltungen der Erfindung sind Gegenstand der Unteransprüche. Es ist von Vorteil, wenn das zweite Segment zwei Oberflächen und drei Kantenflächen aufweist, wobei eine der Kantenflächen mit der Metallscheibe einen Winkel von 90°±5° einschließt. Die Kantenfläche dient dabei vorteilhaft als seitlicher Anschlag für das Piezoelement gegen das jeweilige Haltesegment.

Eine zum Piezoelement gerichtete Kantenfläche des zweiten Segments kann insbesondere einen Vorsprung aufweisen. Dieser Vorsprung verhindert in besonders vorteilhafter Weise ein Verkanten des Piezoelements bei dessen Aufsatz auf die Metallscheibe beispielsweise bei der Montage.

Alternativ oder zusätzlich kann eine zum Piezoelement gerichtete Kantenfläche oder ein Teil der Kantenfläche des zweiten Segments zum Piezoelement hin geneigt sein, derart, dass der Winkel welcher zwischen der Kantenfläche oder des Teils der Kantenfläche und der Metallscheibe gebildet wird, weniger als 90°, insbesondere zwischen 70° und 85°, beträgt. Auch diese Variante ermöglicht eine bessere Montage des Piezoelements auf der Metallscheibe.

Herstellungstechnisch effizient ist es, wenn jeweils zwei um 180° versetzte Halteelemente eine Knickkante im Übergang zwischen dem ersten und dem zweiten Segment aufweisen, welche auf einer gemeinsamen Linie verlaufen, die durch den Mittelpunkt der Scheibe verläuft. Dadurch sind zur Ausformung der Metallscheibe weniger Biegevorgänge notwendig, da jeweils zwei der zweiten Segmente der Halteelemente durch einen Biegevorgang geformt werden können.

Um eine optimale, insbesondere reflexionsfreie, Anbindung der Metallscheibe an den Koppelkörper zu ermöglichen, kann eine λ/4-Anpassungsschicht zwischen der Metallscheibe und dem Koppelelement angeordnet sein. Bislang bestand die Anbindung aus einem Kleber. Die vorgenannte Anpassungsschicht weist demgegenüber eine Schichtdicke auf, welche einem Viertel der Wellenlänge des Ultraschallsignals in dem Material der Anpassungsschicht entspricht, wobei die Schichtdicke je nach akustischer Anforderung an die Bandbreite auch um ± 25% von diesem Wert abweichen kann, im Gegensatz zu einer typischen Klebstoffschicht, deren Schichtdicke bei 0.02 ...0.2 mm liegt.

Erfindungsgemäß wird ein Ultraschallwandler in einem Ultraschall-Durchflussmessgerät eingesetzt, welches nach der Laufzeitdifferenzmethode arbeitet. Ein entsprechendes Ultraschall-Durchflussmessgerät zur Ermittlung der Durchflussgeschwindigkeit oder des Volumendurchflusses eines Messmediums mit einem Messrohr, weist hierfür zumindest zwei entlang des Messrohres angeordneten Ultraschallwandlern gemäß Anspruch 1, wobei ein jeder der Ultraschallwandler den Koppelkörper mit einer Kontaktfläche aufweist, an welcher ein erzeugtes Ultraschallsignal in das Messrohr oder in das Messmedium übertragen oder empfangen werden kann.

Nachfolgend wird der Gegenstand der Erfindung anhand mehrerer Ausführungsbeispiele in den beigefügten Figuren näher erläutert. Sie zeigen:
Fig. 1 Perspektivansicht einer ersten Ausführungsvariante einer erfindungsgemäßen Metallscheibe zur Verwendung in einem Ultraschallwandler;
Fig. 1a Detailansicht der Metallscheibe mit Piezo;
Fig. 2 Draufsicht auf die Metallscheibe mit Piezo;
Fig. 2a Detailansicht der Metallscheibe mit Piezo;
Fig. 3 Seitenansicht einer zweiten Ausführungsvariante einer erfindungsgemäßen Metallscheibe zur Verwendung in einem Ultraschallwandler;
Fig. 3a Detailansicht der Metallscheibe mit Piezo;
Fig. 3b Detailansicht der Metallscheibe mit Piezo;
Fig. 4 Draufsicht auf die Metallscheibe mit Piezo;
Fig. 5 Positionierung der Metallscheibe in einem Ultraschallwandler;
Fig. 6 Schnittansicht eines Ultraschallwandlers, welcher aus der EP 0 974 814 B1 bekannt ist;
Fig. 7 Draufsicht auf die in der EP 0 974 814 B1 verwendete Metallscheibe;
Fig. 8 Seitenansicht auf die in der EP 0 974 814 B1 verwendete Metallscheibe; und
Fig.8a Detailansicht der Seitenansicht der Fig. 8.

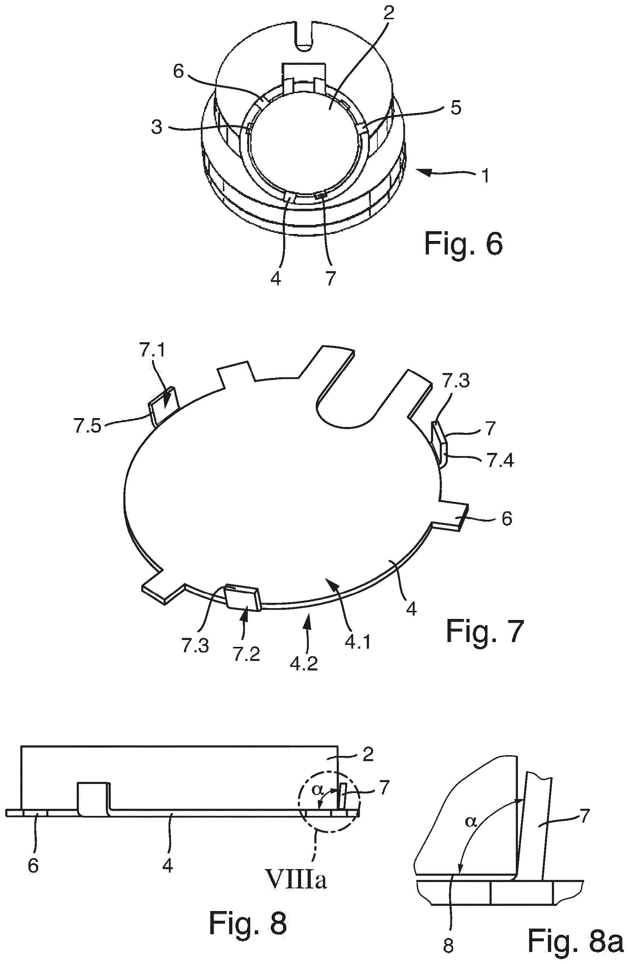

Fig. 6 zeigt einen an sich bekannten Ultraschallwandler 1, welcher in der EP 0 974 814 B1 beschrieben wird und auf deren Offenbarung im Zusammenhang dieser Erfindung vollständig Bezug genommen wird.

Der Ultraschallwandler 1 weist eine Anordnung aus einem Piezoelement 2 und einer Metallscheibe 4 auf. Der Ultraschallwandler weist darüber hinaus ein Koppelelement 3 auf. Dieses Koppelelement 3 wird oftmals auch Koppelkörper genannt. Sehr oft sind Koppelelemente keilförmig ausgestaltet, weshalb der Fachmann von einem Koppelkeil spricht.

Auch im vorliegenden Ausführungsbeispiel ist das Koppelelement als Koppelkeil ausgestaltet. Nachfolgend soll die Form und Funktionsweise des Koppelelements näher erläutert werden.

Die Grundform des Koppelelements ist zylindrisch mit einer Mantelfläche und zwei Grundflächen. Dabei ist eine der beiden Grundflächen abgewinkelt.

Im Unterschied zu bereits bekannten Koppelelementen weist das erfindungsgemäße Koppelelement eine spezielle Ausnehmung 5 in Form einer Schrägbohrung auf, in welcher das Piezoelement 2 festlegbar ist.

Die im Koppelelement 3 angeordnete Ausnehmung 5 ist im vorliegenden Ausführungsbeispiel eine zylindrische Vertiefung mit einer kreisförmigen Grundfläche, welche in Fig. 6 durch das Piezoelement 2 und die Metallscheibe 4 verdeckt wird. Je nach Form des Piezoelements sind allerdings auch andere geometrische Formen, beispielsweise quaderförmige Vertiefungen und dergleichen denkbar. Entsprechend sind die Grundflächen dieser Vertiefungen bzw. Ausnehmungen beispielsweise quadratisch oder rechteckig ausgestaltet. An der Grundfläche der Ausnehmung wird der überwiegende Anteil, also mehr als 50% des vom Piezoelement erzeugten Ultraschallsignals, in das Koppelelement eingeleitet. Zugleich wird durch den Winkel der Grundfläche der Ausnehmung der Eintrittswinkel in das Messmedium definiert.

Dabei weist die Ausnehmung 5 in jedem Fall zumindest eine Grundfläche auf und vorzugsweise eine Randseite auf, welche zumindest bereichsweise durch das Koppelelement begrenzt wird.

Die Metallscheibe 4 weist eine zum Koppelelement 3 gerichtete Unterseite 4.2 und eine zum Piezoelement gerichtete Oberseite 4.1 auf. Die Unterseite ist dabei beispielsweise mit dem Koppelelement 3 respektive der Grundfläche verklebt.

Anhand der Fig. 7 & 8 soll zunächst die Form der bereits bekannten Metallscheibe 4 näher beschrieben.

Diese Metallscheibe 4 weist drei Blechsegmente 6 auf, welche auf der Metallscheibe 4 sind um jeweils ca. 120° gegeneinander versetzt sind. Diese Blechsegmente 6 sind auf der gleichen Ebene wie die Metallscheibe 4 angeordnet und stehen in radial aus dem Außenumfang der kreisförmigen Metallscheibe 4 hervor. Sie dienen als Abstandshalter der Metallscheibe zum Rand bzw. zur Randseite der Ausnehmung 5, so dass die Metallscheibe 4 zentriert in der Ausnehmung 5 liegt.

Die Metallscheibe 4 weist darüber hinaus Halteelemente 7 zur Positionierung und Zentrierung des Piezoelements 2 auf. Diese drei Halteelemente 7 sind um jeweils ca. 120° gegeneinander versetzt. Sie weisen zwei Oberflächen 7.1, 7.2 und drei Kantenflächen 7.3, 7.4, 7.5 auf. Die Halteelemente 7 sind aus der Ebene der Metallscheibe 4 herausgebogen. Sie sind in Richtung der Metallscheibe gebogen und definieren einen Biegewinkel α annähernd 90°. Betrachtet man allerdings Fig. 8a erkennt man, dass der Biegewinkel α welcher durch eine Oberfläche 7.2 des Blechsegments und der Oberseite 4.1 Metallscheibe 4 eingeschlossen wird, keinen idealen Winkel von 90° einschließt, sondern größer ist als 90°, beispielsweise 92°.

Ein idealer 90°-Biegewinkel ist fertigungstechnisch nur schwer realisierbar. Wie aus Fig. 8a erkennbar - kann es daher dazu kommen, dass das Piezoelement 2 nicht auf der Unterseite 4.1 der Metallscheibe 4 aufliegt, sondern sich am angewinkelten Halteelement 7 abstützt. Der zwischen dem Piezoelement 2 und der Metallscheibe 4 entstandene Hohlraum 8 kann teilweise in einem Bereich zwischen 0,2 bis 0,5 mm liegen und begründet einen Messfehler.

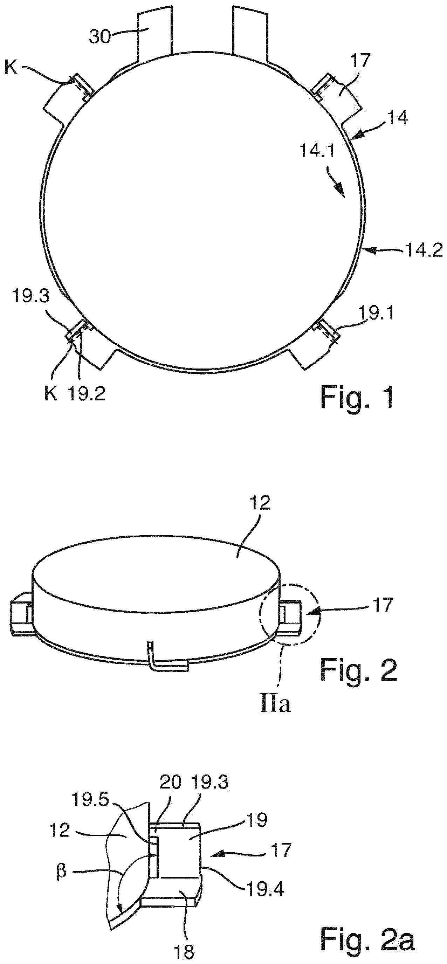

Fig. 1 zeigt eine Metallscheibe 14 und ein Piezoelement 12 eines erfindungsgemäßen Ultraschallwandlers, welcher die Entstehung eines Messfehlers der vorgenannten Art vermeidet. Die Metallscheibe weist eine Oberseite 14.1 und eine Unterseite 14.2 auf, wobei auf der Oberseite das Piezoelement direkt oder indirekt durch Anpassungsmaterial, z.B. Koppelfett, positioniert ist.

Die Lösung des Problems erfolgt durch eine Neugestaltung der Halteelemente 17.

Die Funktionalitäten der Blechsegmente 6 und Halteelemente 7 der Fig. 6-8 werden zudem in einem einzigen Halteelement 17 vereint.

Hierfür weist das Halteelement 17 ein erstes Segment 18 auf, welches auf der gleichen Ebene liegt, wie die Metallscheibe 14 und radial aus dem Umfang der Metallscheibe 14 hervorsteht.

Darüber hinaus weist das Halteelement 17 ein zweites Segment 19 auf, welches aus der Ebene der Metallplatte hervorsteht. Dieses zweite Segment 19 weist zwei Oberflächen 19.1 und 19.2 auf und drei Kantenflächen 19.3, 19.4 und 19.5.

Dabei schließt vorzugsweise eine der Kantenflächen 19.3 des zweiten Segments 19 mit der Oberseite 14.1 der Metallscheibe 14 einen Winkel β von 90° ein. Dies ist allerdings nur ein Ausführungsbeispiel. Durch andere Formgebung des zweiten Segments können auch andere Kantenflächen gestaltet werden.

Das zweite Segment 19 weist vorzugsweise Vorsprünge 20 auf, welche in Richtung des Piezoelements 2 aus einer Kantenfläche 19.3 des zweiten Segments 19 hervorstehen.

Die Halteelemente 17 dienen einerseits zur Zentrierung der Metallscheibe innerhalb der Ausnehmung als auch zur Positionierung und Zentrierung des Piezoelements 12 auf der Metallscheibe 14 selbst. Damit übernehmen die Halteelemente 17 in kompakter Weise eine Doppelfunktion, nämlich die Funktionen der Blechsegmente 6 und der Halteelemente 7 der Metallscheibe aus Fig. 6-8.

Die Ausformung der Metallscheibe kann durch massenproduktionstaugliche Verfahren - insbesondere durch Stanzen oder Laserbearbeitung und Biegen erfolgen.

Wie aus Fig. 2 ersichtlich sind die Halteelemente 17 um 90° versetzt entlang des Außenumfangs der Metallscheibe angeordnet. Je nach Zahl der Halteelemente 17 ist eine möglichst gleichmäßige Verteilung der Halteelemente 17 entlang des Umfangs der Metallscheibe 14 bevorzugt. So ist bei drei Halteelementen beispielsweise ein Versatz von 120° bevorzugt.

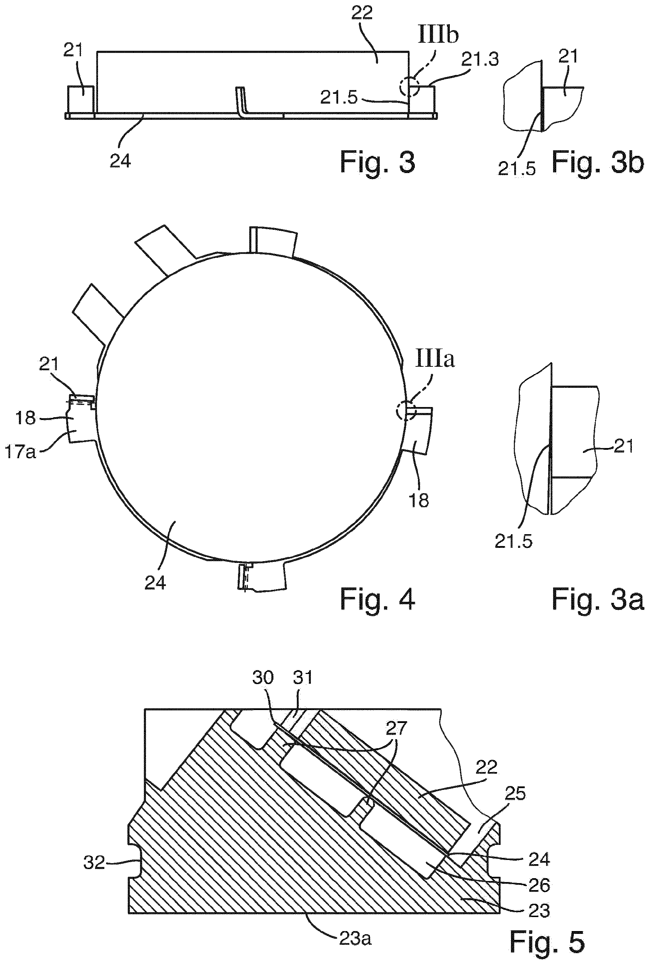

Fig. 3 zeigt eine weitere bevorzugte Ausführungsvariante einer Metallplatte 24 eines erfindungsgemäßen Ultraschallwandlers mit anderen Halteelementen 17a.

Im Unterschied zu den Fig. 1-2 sind allerdings die Kantenfläche 21.5 des zweiten Segments 21 zum Piezoelement 22 hin geneigt, so dass die Kantenfläche auf das Piezoelement 22 zuläuft. Dadurch wird - wie bei den Vorsprüngen 20 der Fig. 2 - ein Halten des Piezoelements gegen seitliches Verrutschen auf der Metallplatte erreicht. Die geringen Auflagefläche der geneigten Kantenflächen 21.5 im Ausführungsbeispiel der Fig. 3, 3a und 3b und die Vorsprünge 20 des Ausführungsbeispiels aus Fig. 2 vermindern vorteilhaft eine Übertragung von Schallimpulsen auf die Kantenflächen der Metallscheibe. Darüber hinaus wird die Gefahr des Verkantens des Piezoelements bei der Montage verringert.

Fig. 5 und 6 zeigen einen erfindungsgemäßen Ultraschallwandler mit einer Ausnehmung und einer darin positionierten Metallplatte 14 - wie sie in Fig. 3 & 4 beschrieben wird und einem darauf positionierten Piezoelement 22.

In einem Koppelelement 23 ist dabei eine Ausnehmung 25 angeordnet. Diese ist zylindrisch ausgebildet. Die Ausnehmung weist eine Randfläche und eine endständige Grundfläche auf, welche im vorliegenden Ausführungsbeispiel durch das Piezoelement 22 und die darunter liegende Metallscheibe 24 verdeckt wird. An der Grundfläche wird der überwiegende Anteil, also mehr als 50% des vom Piezoelement erzeugten Ultraschallsignals, in das Koppelelement eingeleitet. Zugleich wird durch den Winkel der Grundfläche der Eintrittswinkel in das Messmedium definiert.

Das Koppelelement weist in an-sich bekannter Weise eine Kontaktfläche 33 auf an welcher ein vom Piezoelement generiertes Ultraschallsignal in ein Messmedium oder ein Messrohr eines Ultraschall-Durchflussmessgerät überführt wird.

Zwischen der Metallscheibe 24 und dem Koppelelement 23 ist in einer besonders bevorzugten Ausgestaltungsvariante eine λ/4-Anpassungsschicht 26 aus Vergussmaterial angeordnet. Durch dieses Material mit einer akustischen Impedanz, die zwischen der der Metallplatte und des Koppelkörpers liegt, wird eine Reflexion von Ultraschallsignalen vorteilhaft verhindert. Dabei ist die Metallscheibe besonders bevorzugt auf Anschlägen 27 positioniert.

Eine alternative jedoch weniger bevorzugte Ausführungsvarianten ist ein Verkleben der Metallscheibe mit dem Koppelkörper.

Das Koppelelement 23 kann aus einem hochtemperatur-thermoplastischen Material bestehen, wie z.B. einem unverfüllten Polyetherimid (PEI), wie es unter dem Handelsnamen Ultem 1000 erhältlich ist.

Wie in Fig. 5 sichtbar kann ein Koppelelement vorteilhaft an seinem Außenumfang eine Ringnut 32 zur Aufnahme eines O-Rings aufweisen, um den Ultraschallwandler in einer Bohrung eines Behälters oder eines Messrohres eines Durchflussmessgerätes dicht zu fixieren. Dies kann auch beim erfindungsgemäßen Ultraschallwandler erfolgen.

Der Ultraschallwandler kann, wie eingangs bereits erwähnt, z.B. in ein Messrohr eines Ultraschall-Durchflussmessers eingesetzt werden, in dem ein Messmedium (Pulver, Flüssigkeit, Gas, Dampf) fliesst, dessen Volumendurchfluss und/oder Strömungsgeschwindigkeit gemessen werden soll/sollen. Dabei werden zwei Ultraschallwandler beabstandet voneinander ins Messrohr eingesetzt, aufgesetzt oder aufgeschnallt und abwechselnd als Ultraschallsender bzw. Ultraschallempfänger geschalten.

Üblicherweise weist dabei ein jeder der Ultraschallwandler den vorbeschriebenen Koppelkörper 23 mit einer Kontaktfläche 23a auf, an welcher ein vom Piezoelement 22 erzeugtes Ultraschallsignal aus dem Koppelkörper 23 in das Messrohr oder in das Messmedium übertragen oder empfangen werden kann.

Aus z.B. der Laufzeit-Differenz der gesendeten Signale lassen sich die Strömungsgeschwindigkeit und/oder der Volumendurchfluss nach an sich bekannten Verfahren elektronisch ermitteln.

Das Piezoelement kann scheibenförmig ausgebildet sein und besteht vorzugsweise aus einem keramischen piezoelektrischen Material, wie z.B. aus einer PZT-5-Standard-Soft-Keramik.

Die Dicke der Metallscheibe ist bevorzugt höchstens gleich einem Viertel der Wellenlänge, die das vom Piezoelement ausgesandte Ultraschallsignal in der Metallscheibe hat. Diese besteht bevorzugt aus Rein-Aluminium. Sie kann aber auch z.B. aus Titan, Edelstahl, Messing oder Blei bestehen oder Legierungen bestehen.

Als Vergussmasse eignen sich besonders insbesondere flüssig-aushärtende Epoxidharze. Speziell kann ein mit Aluminiumoxid-hochgefüllter Epoxidharz genutzt werden mit mehr als 50Gew.% Aluminiumoxidanteile, insbesondere 70-80 Gew,%. Alternativ zu Vergussmassen können auch Schmelzen zur Anbindung der Metallscheibe an den Koppelkörper eingesetzt werden, die bei gegenüber der Betriebstemperatur erhöhter Temperatur des Sensors eingebracht werden und sich verfestigen oder aus mit gegenüber der Wellenlänge, kleinen Partikeln gemischten dauerelastischen Vergussmasse bestehen. Dies reduziert zusätzlich die thermischen Spannungen.

Die Abfolge der einzelnen Schichten und Bauelemente ergibt sich für das Ultraschallsignal bis zum Austritt aus dem Ultraschallwandler ein Impedanzgradient. Die Impedanzen der jeweiligen Schichten und Bauelemente des Ultraschallwandlers sind in MKS Einheiten angegeben und betragen wie folgt:
- Piezoelement: Z = 18-30 MRayl;
- Metallscheibe (Aluminiumscheibe): Z= kleiner als 18 MRayl, insbesondere 10-17 MRayl;
- Anpassungsschicht bzw. Vergussmasse (Epoxidhalz mit Al₂O₃ gefüllt): 5-9 MRayl, insbesondere 6,5-7,5 MRayl;
- Koppelelement aus PEI: kleiner als 4 MRayl, insbesondere 2,5-3,5 MRayl. Aufgrund der angepassteren Impedanzübergänge kann vorteilhaft eine bessere Signalstärke des Ultraschallsignals erreicht werden.

Zudem ergibt sich durch die Schichtfolge auch ein Gradient bezüglich des thermischen Ausdehnungskoeffizienten in der Abfolge der Bauteile, wodurch der Ultraschallwandler auch in eine verbesserte Temperaturwechselbeständigkeit aushält und somit für Messungen in größeren Temperaturbereichen eingesetzt werden kann, ohne dass die Materialschichten hohen Zug- und Scherspannungen ausgesetzt sind.

Zusätzlich zu den Halteelementen 17 oder 20 weist die Metallplatte des Ausführungsbeispiels vorteilshaft auch Positioniersegmente 30 auf, in einen in einen Freibereich 31 der Randseite der zylindrischen Ausnehmung 25 eingreifen und dort als Verdrehsicherung der Metallscheibe 14 innerhalb der Ausnehmung 25 fungieren.

**Bezugszeichenliste**

| | | | |
|---|---|---|---|
| 1 | Ultraschallwandler | | |
| 2 | Piezoelement | | |
| 3 | Koppelelement | | |
| 4 | Metallscheibe | | |
| 5 | Ausnehmung | | |
| 6 | Blechsegmente | | |
| 7 | Halteelemente | | |
| 7.1 | Oberfläche | | |
| 7.2 | Oberfläche | | |
| 7.3 | Kantenfläche | | |
| 7.4 | Kantenfläche | | |
| 7.5 | Kantenfläche | | |
| 8 | Hohlraum | | |
| 12 | Piezoelement | | |
| 14 | Metallscheibe | | |
| 14.1 | Oberfläche | | |
| 14.2 | Oberfläche | | |
| 17 | Halteelement | | |
| 18 | erstes Segment des Halteelements 17 | | |
| 19 | zweites Segment des Halteelements 17 | | |
| 19.1 | Oberfläche | | |
| 19.2 | Oberfläche | | |
| 19.3 | Kantenfläche | | |
| 19.4 | Kantenfläche | | |
| 19.5 | Kantenfläche | | |
| 20 | Vorsprung | | |
| 17a | Halteelement | | |
| 21 | zweites Segment des Halteelements 17a | | |
| 22 | Piezoelement | | |
| 23 | Koppelelement | 23a | Kontaktfläche |
| 24 | Metallscheibe | | |
| 25 | Ausnehmung | | |
| 26 | Anpassungsschicht | 27 | Anschläge |
| 30 | Positienierelemente | 31 | Freibereich |
| 32 | Ringnut | K | Knickkante |

## Patentansprüche

1. Ultraschallwandler, umfassend ein Koppelelement (23), das eine erste Ausnehmung (25) aufweist, und ein Piezoelement (12, 22), welches in der ersten Ausnehmung (25) angeordnet ist und welches ein Ultraschallsignal in das Koppelelement (23) einleitet,
wobei zwischen dem Piezoelement (22) und dem Koppelelement (23) eine Zwischenlage angeordnet ist,
welche eine Metallscheibe (14, 24) umfasst;
wobei
die Metallscheibe (14, 24) Halteelemente (17, 17a) aufweist
a) mit jeweils einem ersten Segment (18), welches auf der gleichen Ebene liegt, wie die Metallscheibe (14, 24) und radial aus dem Umfang der Metallscheibe (14, 24) hervorsteht und
b) mit jeweils einem zweiten Segment (19, 21), welches sich an das erste Segment (18) anschließt und welches aus der Ebene der Metallplatte (14, 24) hervorsteht und mit dem ersten Segment (18) verbunden ist,
wobei die Halteelemente (17, 17a) die Metallscheibe (14, 24) in der Ausnehmung (25) randseitig abstützen und wobei die Halteelemente (17, 17a) ein seitliches Verschieben des auf der Metallscheibe (14, 24) aufsitzenden Piezoelements (12, 22) verhindern.

2. Ultraschallwandler nach Anspruch 1, **dadurch gekennzeichnet, dass** das zweite Segment (19) zwei Oberflächen (19.1, 19.2) und drei Kantenflächen (19.3, 19.4, 19.5) aufweist, wobei eine der Kantenflächen (19.5) mit der Metallscheibe (14) einen Winkel (β) von 90°±5° einschließt.

3. Ultraschallwandler nach einem der vorhergehenden Ansprüche, **dadurch gekennzeichnet, dass** eine zum Piezoelement (12) gerichtete Kantenfläche (19.5) des zweiten Segments (19) einen Vorsprung (20) aufweist.

4. Ultraschallwandler nach einem der vorhergehenden Ansprüche, **dadurch gekennzeichnet, dass** eine zum Piezoelement (22) gerichtete Kantenfläche (21 .5) oder ein Teil der Kantenfläche des zweiten Segments (21) zum Piezoelement (22) hin geneigt ist, derart, dass der Winkel (β) welcher zwischen der Kantenfläche oder des Teils der Kantenfläche und der Metallscheibe (22) oder einer dazu parallelen Ebene gebildet wird, weniger als 90°, insbesondere zwischen 70° und 85°, beträgt.

5. Ultraschallwandler nach einem der vorhergehenden Ansprüche, **dadurch gekennzeichnet, dass** jeweils zwei um 180° versetzte Halteelemente (17, 17a) eine Knickkante (K) im Übergang zwischen dem ersten und dem zweiten Segment (18, 19, 21) aufweisen, welche auf einer gemeinsamen Linie verlaufen, die durch den Mittelpunkt der Metallscheibe (14, 24) verläuft.

6. Ultraschallwandler nach einem der vorhergehenden Ansprüche, **dadurch gekennzeichnet, dass** zwischen der Metallscheibe (14, 24) und dem Koppelkörper (23) eine I/4-Anpassungsschicht (26) angeordnet ist.

7. Ultraschall-Durchflussmessgerät zur Ermittlung der Durchflussgeschwindigkeit oder des Volumendurchflusses eines Messmediums mit einem Messrohr und zumindest zwei entlang des Messrohres angeordneten Ultraschallwandlern gemäß Anspruch 1, wobei ein jeder der Ultraschallwandler den Koppelkörper (23) mit einer Kontaktfläche (23a) aufweist, an welcher ein erzeugtes Ultraschallsignal in das Messrohr oder in das Messmedium übertragen oder empfangen werden kann.

## Claims

1. Ultrasonic converter, comprising a coupling element (23), which has a first recess (25), and a piezo element (12, 22), which is arranged in the first recess (25) and which introduces an ultrasonic signal into the coupling element (23),
wherein an intermediate layer is arranged between the piezo element (22) and the coupling element (23),
said layer having a metal disk (14, 24) ;
wherein the metal disk (14, 24) has retention elements (17, 17a)
a) each having a first segment (18), which is located on the same plane as the metal disk (14, 24) and projects radially out of the circumference of the metal disk (14, 24), and
b) each having a second segment (19, 21), which is adjacent to the first segment (18), and which projects out of the plane of the metal disk (14, 24) and is connected to the first segment (18),
wherein the retention elements (17, 17a) support the metal disk (14, 24) at the side in the recess (25) and wherein the retention elements (17, 17a) prevent a lateral shifting of the piezo element (12, 22) resting on the metal disk (14, 24).

2. Ultrasonic converter as claimed in Claim 1,
**characterized in that**
the second segment (19) has two surfaces (19.1, 19.2) and three edge surfaces (19.3, 19.4, 19.5), wherein one of the edge surfaces (19.5) forms an angle of 90°±5° with the metal disk (14).

3. Ultrasonic converter as claimed in one of the previous claims, **characterized in that** an edge surface (19.5) of the second segment (19), which is oriented towards the piezo element (12), has a projection (20).

4. Ultrasonic converter as claimed in one of the previous claims, **characterized in that** an edge surface (21.5), which is oriented towards the piezo element (22), or a part of the edge surface of the second segment (21), is inclined towards the piezo element (22) in such a way that the angle formed between the edge surface or the part of the edge surface and the metal disk (22), or a plane parallel to this, is less than 90°, and is particularly between 70° and 85°.

5. Ultrasonic converter as claimed in one of the previous claims, **characterized in that** two retention elements (17, 17a), offset at 180°, each present a bent edge (K) in the transition between the first and second segment (18, 19, 21), said edges being situated on a common line that runs through the center of the metal disk (14, 24).

6. Ultrasonic converter as claimed in one of the previous claims, **characterized in that** a I/4 adaptation layer (26) is arranged between the metal disk (14, 24) and the coupling body (23).

7. Ultrasonic flowmeter designed to determine the flow velocity or the volume flow of a measured medium with a measuring tube and at least two ultrasonic converters as claimed in Claim 1 that are arranged along the measuring tube, wherein each of the ultrasonic converters has the coupling body (23) with a contact surface (23a), at which a generated ultrasonic signal can be transmitted to the measuring tube or measuring medium or can be received.

## Revendications

1. Convertisseur à ultrasons, comprenant un élément de couplage (23), qui présente un premier évidement (25), et un élément piézoélectrique (12, 22), lequel est disposé dans le premier évidement (25) et lequel introduit un signal ultrasonore dans l'élément de couplage (23),
une couche intermédiaire étant disposée entre l'élément piézoélectrique (22) et l'élément de couplage (23),
laquelle couche englobe un disque métallique (14, 24) ;
le disque métallique (14, 24) comportant des éléments de retenue (17, 17a)
a) avec respectivement un premier segment (18), lequel se situe sur le même plan que le disque métallique (14, 24) et déborde radialement de la circonférence du disque métallique (14, 24), et
b) avec respectivement un deuxième segment (19, 21), qui jouxte le premier segment (18), et lequel deuxième segment déborde du plan du disque métallique (14, 24) et est relié avec le premier segment (18),
les éléments de retenue (17, 17a) supportant au bord le disque métallique (14, 24) dans l'évidement (25) et les éléments de retenue (17, 17a) empêchant un décalage latéral de l'élément piézoélectrique (12, 22) reposant sur le disque métallique (14, 24).

2. Convertisseur à ultrasons selon la revendication 1,
**caractérisé**
**en ce que** le deuxième segment (19) présente deux surfaces (19.1, 19.2) et trois surfaces de bord (19.3, 19.4, 19.5), l'une des surfaces de bord (19.5) formant un angle de 90°±5° avec le disque métallique (14).

3. Convertisseur à ultrasons selon l'une des revendications précédentes, **caractérisé en ce qu'**une surface de bord (19.5) du deuxième segment (19), laquelle est orientée vers l'élément piézoélectrique (12), présente une saillie (20).

4. Convertisseur à ultrasons selon l'une des revendications précédentes, **caractérisé en ce qu'**une surface de bord (21.5), laquelle est orientée vers l'élément piézoélectrique (22), ou une partie de la surface de bord du deuxième segment (21), est inclinée vers l'élément piézoélectrique (22), de telle sorte que l'angle formé entre la surface de bord ou la partie de la surface de bord et du disque métallique (22), ou un plan parallèle à celle-ci, est inférieur à 90°, notamment compris entre 70° et 85°.

5. Convertisseur à ultrasons selon l'une des revendications précédentes, **caractérisé en ce que** deux éléments de retenue (17, 17a), décalés de 180°, présentent chacun un bord de cassure (K) dans la transition entre le premier et le deuxième segment (18, 19, 21), lesquels bords sont situés sur une ligne commune, qui passe par le centre du disque métallique (14, 24).

6. Convertisseur à ultrasons selon l'une des revendications précédentes, **caractérisé en ce qu'**une couche d'adaptation λ/4 (26) est disposée entre le disque métallique (14, 24) et le corps de couplage (23).

7. Débitmètre à ultrasons destiné à la détermination de la vitesse d'écoulement ou du débit volumique d'un produit mesuré avec un tube de mesure et au moins deux convertisseurs à ultrasons disposés le long du tube de mesure selon la revendication 1, chacun des convertisseurs à ultrasons comportant le corps de couplage (23) avec une surface de contact (23a), au niveau de laquelle un signal ultrasonore généré peut être transmis ou reçu dans le tube de mesure ou dans le produit mesuré.
